# EUROPÄISCHE PATENTANMELDUNG

(11) **EP 1 995 352 A1**
(43) Veröffentlichungstag der Anmeldung: **26.11.2008**
(21) Anmeldenummer: 07012413.6
(22) Anmeldetag: 25.06.2007
(51) Int. Cl.: C25B 1/04, F02M 25/12, B01J 19/08

(54) **Verfahren zur Erzeugung eines brennbaren Gemisches**

(30) Priorität: 04.05.2007 DE 102007017568
(71) Anmelder: Best, Volker, 21354 Walmsburg/Bleckede (DE)
(72) Erfinder: Best, Volker, 21354 Walmsburg/Bleckede (DE)
(74) Vertreter: Knoop, Philipp

(57) **Zusammenfassung**

Um bei einem Verfahren zur Herstellung eines brennbaren Gemisches ausgehend von Wasser, bei welchem unter Einsatz von durch eine Spannungsquelle (1) mit einer Ausgangsspannung bereitgestellter elektrischer Energie Wasser in Wasserstoff und Sauerstoff zerlegt wird und an mindestens einen Bestandteil des Gemisches ein elektrisches Feld angelegt wird, den Wirkungsgrad zu erhöhen und andererseits die technische Machbarkeit sicherzustellen, wird vorgeschlagen, dass (a) Wasser durch eine Elektrolyse zerlegt wird; (b) der in Schritt (a) erzeugte Wasserstoff getrennt von dem Sauerstoff abgeleitet wird; und (c) nur an den im Schritt (a) erzeugten und im Schritt (b) abgeleiteten Wasserstoff ein elektrisches Feld angelegt wird; (d) anschließend der in Schritt (a) erzeugte Sauerstoff mit dem in Schritt (c) behandelten Wasserstoff zusammengeführt wird.

## Beschreibung

Die vorliegende Erfindung betrifft ein Verfahren zur Herstellung eines brennbaren Gemisches ausgehend von Wasser, bei welchem unter Einsatz von durch eine Spannungsquelle mit einer Ausgangsspannung bereitgestellter elektrischer Energie Wasser in Wasserstoff und Sauerstoff zerlegt wird und an mindestens einen Bestandteil des Gemisches ein elektrisches Feld angelegt wird.

Die folgende Erfindung betrifft gleichermaßen eine Vorrichtung zur Erzeugung eines brennbaren Gemisches ausgehend von Wasser umfassend eine Zerlegungsvorrichtung zum Zerlegen von Wasser in die Bestandteile Wasserstoff und Sauerstoff unter Einsatz elektrischer Energie, eine elektrische Kondensatoreinheit, um an mindestens einen der Bestandteile ein elektrisches Feld anzulegen, eine elektrische Spannungsquelle mit einer Ausgangsspannung zur elektrischen Versorgung der Zerlegungsvorrichtung und der Kondensatoreinheit.

Ein Verfahren und eine Vorrichtung der eingangs genannten Art sind beispielsweise bekannt aus der US 5,149,407. Bei der bekannten Vorrichtung und dem bekannten Verfahren wird Wasser zwischen den Elektroden eines Zylinderkondensators durch Anlegen eines gepulsten elektrischen Feldes zwischen den Kondensatorelektroden zerlegt. Hierbei wird gemäß der Beschreibung des genannten Patentes eine Aufspaltung des in dem Kondensator befindlichen Wassers in Wasserstoffgas und Sauerstoffgas erreicht. Anschließend wird das auf diese Weise erzeugte Gemisch aus Wasserstoff- und Sauerstoffgasen weiter einem elektrischen Feld ausgesetzt, wodurch nach Aussage der Verfasser der vorbekannten Patentschrift eine Art Ionisierung der Gase erreicht wird. Ferner ist gemäß diesem Stand der Technik eine weitere Anregung der Ionen durch Laserbestrahlung vorgesehen.

Nachteilig an der bekannten Vorrichtung und dem bekannten Verfahren ist, dass die Aufspaltung von Wasser in Wasserstoff- und Sauerstoffgas im Prinzip lediglich durch Anlegen eines elektrischen Feldes bewirkt werden soll. Zum einen sind Zweifel erhoben worden an der technischen Machbarkeit dieser Vorgehensweise. Zum anderen ist der Wirkungsgrad dieses Verfahrens zur Ausbreitung von Wasser in die Bestandteile Wasserstoff und Sauerstoff ungünstig. Die Bestrahlung mit Laserlicht ist zudem aufwendig.

Der vorliegenden Erfindung liegt daher die Aufgabe zugrunde, bei einem gattungsgemäßen Verfahren und einer gattungsgemäßen Vorrichtung zur Herstellung eines brennbaren Gemisches ausgehend von Wasser den Wirkungsgrad zu erhöhen und andererseits die technische Machbarkeit sicherzustellen.

Erfindungsgemäß wird diese Aufgabe durch ein Verfahren der eingangs genannten Art gelöst, bei welchem in einem Schritt (a) das Wasser durch eine Elektrolyse zerlegt wird; der in Schritt (a) erzeugte Wasserstoff getrennt von dem Sauerstoff abgeleitet wird; und nur der im Schritt (a) erzeugte und im Schritt (b) abgeleitete Wasserstoff dem elektrischen Feld ausgesetzt wird; anschließend der im Schritt (a) erzeugte Sauerstoff mit dem im Schritt (c) behandelten Wasserstoff zusammengeführt wird. Erfindungsgemäß erfolgt somit die eigentliche Zerlegung von Wasser in Wasserstoffgas und Sauerstoffgas unter Einsatz einer herkömmlichen Elektrolyse. Die Elektrolyse ist ein bekanntes und erprobtes Verfahren zur Aufspaltung von Wasser in Wasserstoff- und Sauerstoffgas. Ein Anlegen eines elektrischen Feldes erfolgt separat nur für den aus der Elektrolyse stammenden Wasserstoff, wobei der Sauerstoff nicht dem elektrischen Feld ausgesetzt wird. Hierdurch wurde empirisch eine deutlich verbesserte Effizienz gegenüber bekannten Verfahren erzielt. Durch das anschließende Zusammenführen des direkt aus der Elektrolyse stammenden Sauerstoffes mit dem durch das elektrische Feld behandelten Wasserstoff erhält man mit Vorteil ein brennbares Gemisch, welches beispielsweise durch elektrische Zündung thermische Energie besonders effizient freisetzen kann. Mit Vorteil entsteht als "Abgas" dieser Verbrennungsreaktion lediglich für die Umwelt vollkommen neutrales und unschädliches Wasser.

Das erfindungsgemäße Verfahren wird noch verbessert, wenn eine Membranelektrolyse durchgeführt wird. Diese ermöglicht eine besonders günstige räumliche Trennung von Wasserstoff und Sauerstoff, was im Zusammenhang mit der vorliegenden Erfindung entscheidend ist, um anschließend den Wasserstoff separat weiterzubehandeln. Ferner ist die Membranelektrolyse besonders günstig in Bezug auf die Ausbeute an elektrolysiertem Wasser in Bezug auf die eingesetzte elektrische Energie.

Das Verfahren der Erfindung wird weiter optimiert, wenn die elektrische Energie von einer Batterie und/oder Akkumulator, vorzugsweise mit einer Ausgangsspannung von 12V bereitgestellt wird. Auf diese Weise lässt sich das erfindungsgemäße Verfahren beispielsweise mit einer Autobatterie betreiben. Es ist prinzipiell denkbar, ein Auto mit dem durch dieses erfindungsgemäße Verfahren hergestellten brennbaren Gas zu betreiben, wobei das Gas im Auto selber mit dem erfindungsgemäßen Verfahren mit Vorteil nach Bedarf erzeugt werden kann.

Um die Elektrolyse und die Weiterbehandlung von Wasserstoff in einem elektrischen Feld besonders günstig durchführen zu können, ist in Weiterbildung der Erfindung vorgesehen, dass das erfindungsgemäße Verfahren eine Erhöhung der Ausgangsspannung umfasst.

Die Behandlung des aus der Elektrolyse gewonnenen Wasserstoffes im elektrischen Feld wird besonders wirkungsvoll, wenn in Ausgestaltung der Erfindung das elektrische Feld bei gleichbleibender Feldrichtung gepulst wird. Durch geeignete Wahl der Frequenz der Pulse können Resonanzen sowohl auf molekularer oder atomarer Basis als auch im Bezug auf die mechanischen Abmessungen beispielsweise eines das Feld erzeugenden Kondensators ausgenutzt werden.

Ein Einsatz des erfindungsgemäßen Verfahrens kann umweltschonend, insbesondere ohne jeglichen Einsatz fossiler Energie, erfolgen, wenn in besonders vorteilhafter Ausgestaltung der Erfindung der Akkumulator unter Einsatz von regenerativer Energie, insbesondere Windenergie, aufgeladen wird.

Die der Erfindung zugrundeliegende Aufgabe wird gleichermaßen gelöst durch eine Vorrichtung zur Erzeugung eines brennbaren Gemisches ausgehend von Wasser mit den eingangs genannten Merkmalen, bei der die Zerlegungsvorrichtung zur elektrolytischen Zerlegung von Wasser ausgestaltet ist. Die Elektrolyse ist ein bewährtes und effizientes Verfahren, um Wasser in die Bestandteile Wasserstoff und Sauerstoff zu zerlegen. Gegenüber dem oben zitierten Stand der Technik, bei dem eine Zerlegung von Wasser in Wasserstoff und Sauerstoff im Prinzip durch Anlegen eines elektrischen Feldes erfolgen soll, ist zum einen die technische Durchführbarkeit sichergestellt. Zum anderen ist der Wirkungsgrad bei der elektrolytischen Zerlegung günstig.

In vorteilhafter Ausgestaltung der erfindungsgemäßen Vorrichtung ist die Zerlegungsvorrichtung zur Durchführung einer Membranelektrolyse ausgebildet.

Um eine getrennte Weiterbehandlung der Elektrolysegase zu ermöglichen, sind in bevorzugter Ausgestaltung der erfindungsgemäßen Vorrichtung separate Mittel zum Auffangen und getrennten Ableiten jedes der beiden Elektrolysegase aus der Zerlegungsvorrichtung vorgesehen.

Wenn in besonders günstiger Ausgestaltung der Erfindung nur die Mittel zum Auffangen von Wasserstoff in die Kondensatoreinheit mündend angeordnet sind, wird der Wirkungsgrad weiter verbessert, indem gezielt nur Wasserstoff einem elektrischen Feld ausgesetzt wird. Dies hat sich als wirkungsvoller und effizienter erwiesen als die gleichzeitige Behandlung des Gemisches aus Wasserstoff und Sauerstoff in einem elektrischen Feld, wie im Stand der Technik üblich.

Gemäß einer anderen günstigen Ausführungsform der Erfindung ist die Kondensatoreinheit als Plattenkondensator und/oder Zylinderkondensator ausgestaltet. Diese Kondensatorgeometrien erlauben die Erzeugung für die Anwendung einer besonders günstigen elektrischen Feldverteilung.

Wenn gemäß bevorzugter Ausführungsform der erfindungsgemäßen Vorrichtung eine Spannungserhöhungsvorrichtung zum Erhöhen der Ausgangsspannung vorgesehen ist, kann die Vorrichtung zum Beispiel mit einer gewöhnlichen Autobatterie betrieben werden, welche 12V Ausgangsspannung liefert. Aufgrund der Spannungserhöhungsvorrichtung lässt sich diese Spannung auch auf Hochspannungswerte hochsetzen, um mit Vorteil ein besonders starkes elektrisches Feld am Kondensator zu erzeugen. Dies ist vorteilhaft für die Behandlung des Wasserstoffes aus der Elektrolyse mit einem besonders starken elektrischen Feld.

In Weiterbildung der erfindungsgemäßen Vorrichtung sind Mittel zum Umformen der Ausgangsspannung in einem mit einer Frequenz gepulste Spannung mit konstanter Polung vorgesehen, wobei die Frequenz variabel wählbar ausgestaltet ist. Durch diese Maßnahme kann die Vorrichtung mit einer einfachen Autobatterie als Spannungsquelle betrieben werden, wobei dennoch eine gepulste Betriebsweise der Kondensatoreinheit erzielbar ist. Aufgrund der gepulsten Spannung wird ein pulsierendes elektrisches Feld mit entsprechender Frequenz generiert.

Bei geeigneter Wahl der Pulsfrequenz lässt sich eine besonders gute Behandlung des Wasserstoffes erhalten, wobei auch Resonanzphänomene ausgenutzt werden können.

In Ausgestaltung der Vorrichtung gemäß der Erfindung sind Mittel zum Mischen des in der Kondensatoreinheit behandelten Wasserstoffes mit dem Sauerstoff vorgesehen. Da erfindungsgemäß eine separate Behandlung des erzeugten Sauerstoffes und Wasserstoffes erfolgt, ist eine Zusammenführung erforderlich. Dies kann beispielsweise mit einem herkömmlichen Vergaser mit einstellbaren Mischungsverhältnissen erfolgen. Auch kann eine zusätzliche Beimischung von Umgebungsluft oder anderen Gasen vorgesehen sein, um zu einem besonders vorteilhaften brennbaren Gemisch zu gelangen.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: Prinzipskizze der erfindungsgemäßen Vorrichtung zur Herstellung eines brennbaren Gemisches zur Veranschaulichung des erfindungsgemäßen Verfahrens
- Figur 2:: Schaltungsschema einer Schaltung zur Erzeugung variabler Spannungspulse zum Betrieb der Anlage aus Figur 1.

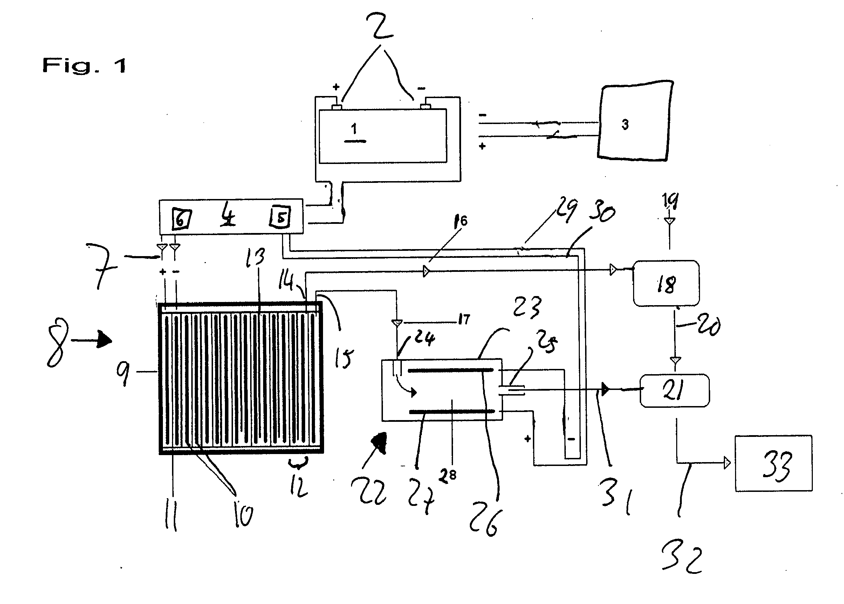

Figur 1 zeigt eine erfindungsgemäße Vorrichtung zur Herstellung eines brennbaren Gemisches ausgehend von Wasser. Die Anlage umfasst eine Autobatterie 1. Die Autobatterie 1 liefert an den Ausgangskontakten 2 eine Ausgangsspannung von 12V. Die Speicherkapazität beträgt 65 Amperestunden. Im Bild rechts neben der Autobatterie 1 ist schematisch eine alternative Energiequelle 3 dargestellt, mit welcher man die Autobatterie 1 aufladen kann. Als alternative Energiequellen 3 kommt zum Beispiel eine Windenergieanlage oder ähnliches in Frage.

Die Ausgangskontakte 2 der Autobatterie 1 sind an eine elektronische Steuerung 4 angeschlossen. In der elektronischen Steuerung 4 ist ein Spannungserhöher 5 und ein Impulsgenerator 6 enthalten. Die elektronische Steuerung 4 versorgt über die elektrische Leitung 7 eine Elektrolyseeinheit 8 mit einer Gleichspannung.

Die Elektrolyseeinheit 8 weist einen Außenkorpus 9 auf, welcher die darin enthaltenen Bauteile gasdicht einschließt. Innerhalb des Außenkorpus 9 der Elektrolyseeinheit 8 befinden sich Elektrodenplatten 10. Die Elektrodenplatten 10 sind im Wechsel als Anode bzw. Kathode geschaltet. Jedes Paar Elektrodenplatten 10 ist durch eine semipermeable Membran 11 getrennt. Jede Einheit aus einem Elektrodenplattenpaar 10 mit zugehöriger semipermeabler Membran 11 bildet eine Elektrolysezelle 12. Die Elektrolysekammern 12 sind durch Kammertrennwände 13 voneinander getrennt. In jeder Elektrolysekammer innerhalb des Außenkorpus 9 der Elektrolyseeinheit 8 befindet sich zu elektrolysierendes Wasser. Nicht dargestellt ist eine Zufuhr von zu elektolysierendem Wasser. Der Außenkorpus 9 ist mit einem Ausgang 14 für Sauerstoff und einem Ausgang 15 für Wasserstoff versehen. An dem Ausgang 14 für Sauerstoff ist eine Sauerstoffableitung 16 angeschlossen. Die Fließrichtung innerhalb der Sauerstoffableitung 16 ist durch einen Pfeil angedeutet. An den Ausgang 15 im Außenkorpus 9 der Elektrolyseeinheit 8 ist eine Wasserstoffableitung 17 angeschlossen, deren Strömungsrichtung ebenfalls durch einen Pfeil angedeutet ist.

Die Sauerstoffableitung 16 mündet am anderen Ende in einen Luftmischer 18. Der Luftmischer 18 weist zusätzlich eine Luftzuführung 19 auf. Der Luftmischer 18 kann mit Regelventilen versehen sein, um ein gewünschtes Verhältnis von aus der Sauerstoffableitung 16 zugeführtem Sauerstoff über die Luftzuführung 19 zugeführter Umgebungsluft zu erhalten. Der Luftmischer 18 verfügt über eine Ausgangsleitung 20, aus welcher ein Gemisch aus Luft und Sauerstoff aus dem Luftmischer 18 austritt. Die Ausgangsleitung 20 des Luftmischers 18 mündet in einen Vergaser 21.

Die Wasserstoffableitung 17 führt von dem Wasserstoffausgang 15 der Elektrolyseeinheit 8 zu einer Erregereinheit 22. Die Erregereinheit 22 besteht aus einem gasdichten Gehäuse 23 mit einer Quaderform. Das Gehäuse 23 weist eine Einlassöffnung 24 für zu behandelnden Wasserstoff und am anderen Ende eine Auslassöffnung 25 zum Auslassen des behandelten Wasserstoffes auf. Im Inneren der Erregereinheit 22 befindet sich ein Plattenkondensator mit zwei Kondensatorplatten 26, 27. In einem Raum 28 zwischen den Kondensatorplatten 26, 27 befindet sich die Erregerkammer 28, in welcher der Wasserstoff dem elektrischen Feld zwischen den Kondensatorplatten 26, 27 ausgesetzt wird.

Die Kondensatorplatten 26, 27 sind über die elektrischen Leitungen 29, 30 über die elektronische Steuerung 4 mit Spannung versorgt. Die Leitungen 29, 30 führen den Kondensatorplatten 26, 27 eine von dem Spannungserhöher 5 und Impulsgenerator 6 innerhalb der elektronischen Steuerung 4 erzeugte getaktete unipolare Hochspannung zu.

Die Auslassöffnung 25 ist an einer Auslassleitung 31 angeschlossen, welche in den Vergaser 21 mündet. Ein Auslass 32 des Vergasers 21 leitet das als Ergebnis des erfindungsgemäßen Verfahrens hergestellte brennbare Gemisch aus Sauerstoff, mit einem elektrischen Feld behandeltem Wasserstoff sowie ggf. Umgebungsluft einem Motor 33 zu.

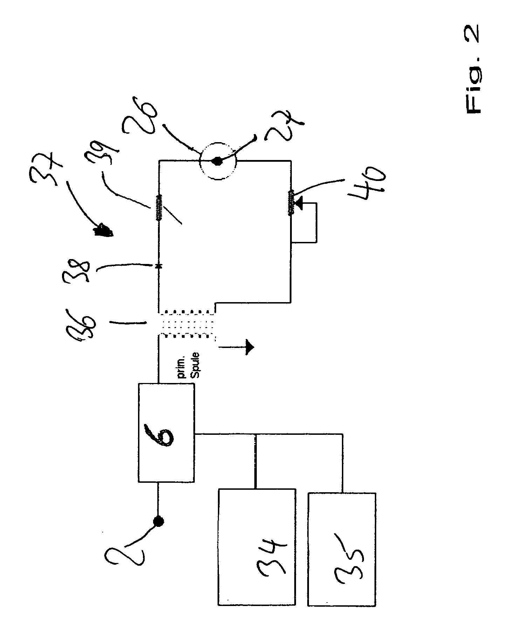

Die Figur 2 zeigt schematisch eine Schaltung, welche innerhalb der elektronischen Steuerung 4 realisiert ist. Eine von den Ausgangskontakten 2 der Autobatterie 1 stammende Gleichspannung versorgt den Impulsgenerator 6.

Der Impulsgenerator 6 verfügt über einen Amplitudenwähler 34 und einen Pulsregler 35. Über eine induktive Kopplung 36 wird Energie in einen Schwingkreis 37 eingeleitet. Der Schwingkreis 37 weist als wichtige Komponente eine Sperrdiode 38 auf. Die den Schwingkreis bildende Kapazität ist gebildet von den Kondensatorplatten 26, 27. In der Darstellung gemäß Figur 2 ist der Kondensator als Zylinderkondensator dargestellt, wohingegen in Figur 1 eine Version mit einem Plattenkondensator skizziert ist.

Der Schwingkreis 37 weist in üblicher Weise Spulen 39, 40 auf, wobei die Spule 40 eine variable Induktion aufweist. Die Schaltung entspricht jener gemäß Figur 2 aus US 5,149,407. Einzelheiten dieser Schaltung sind der genannten Schrift zu entnehmen, insbesondere in Spalte 5, letzter Absatz bis Spalte 7, Zeile 36. Eine alternative Beschaltung der Erregereinheit 22 kann der Figur 8b der genannten Druckschrift entnommen werden, in Verbindung mit der dazugehörigen Beschreibung.

Um mit der beschriebenen erfindungsgemäßen Anlage ein brennbares Gemisch ausgehend von Wasser herzustellen, wird zunächst Wasser in die Elektrolyseeinheit 8 gegeben. Die von der 12V Autobatterie 1 gelieferte Spannung wird über den Spannungserhöher 5, welcher im Wesentlichen aus einer Spulenstrecke erhöht. Über die elektrische Leitung 7 wird die auf diese Weise hochgesetzte Spannung an die Elektrodenplatten 10 innerhalb der Elektrolyseeinheit 8 angelegt.

Hierdurch wird eine elektrolytische Zerlegung des darin befindlichen Wassers in die beiden Elemente Wasserstoff und Sauerstoff bewirkt.

Der an der Kathode entstehende Wasserstoff wird über verschiedene, nicht dargestellte, Auffangleitungen aufgefangen und schließlich über den Ausgang 15 in den Außenkorpus 9 der Elektrolyseeinheit 8 der Wasserstoffableitung 17 zugeführt.

Auf der anderen Seite wird in analoger Weise der an der Anode entstehende Sauerstoff gesammelt und über den Ausgang 14 und die Sauerstoffableitung 16 aus der Elektrolyseeinheit 8 abgeführt. Der Sauerstoff gelangt über die Sauerstoffableitung 16 in den Luftmischer 18.

Demgegenüber wird der Wasserstoff über die Wasserstoffableitung 17 der Einlassöffnung 24 der Erregereinheit 22 zugeführt. Auf diese Weise gelangt der Wasserstoff über die Einlassöffnung 24 in die Erregerkammer 28 zwischen den Kondensatorplatten 26, 27. Zwischen den Kondensatorplatten 26, 27 wird ein elektrisches Feld im Bereich der Erregerkammer 28 aufgebaut aufgrund der Beschaltung durch die elektrischen Leitungen 29, 30.

Mit Hilfe des in Figur 2 beschriebenen Schaltkreises wird nun eine unipolare in Pulsen getaktete Hochspannung an die Kondensatorplatten 26, 27 angelegt. Hierdurch entsteht ein elektrisches Feld im Bereich der Erregerkammer 28, in welchem sich der aus der Elektrolyse stammende Wasserstoff befindet. Über den Amplitudenwähler 34 und den Pulsregler 35 wird die Frequenz und Amplitude der Spannung eingestellt. Dies kann über einen automatischen Regler erfolgen, um eine optimale Behandlung des Wasserstoffes in der Erregereinheit 22 zu erreichen. Hierbei können auch Resonanzphänomene berücksichtigt werden.

Nach der Behandlung tritt der behandelte Wasserstoff über die Auslassöffnung 25 in die Auslassleitung 31 aus der Erregereinheit 22 aus und wird über die Auslassleitung 31 in den Vergaser 21 eingeleitet. Der Vergaser 31 wird auf der anderen Seite über die Ausgangsleitung 20 des Luftmischers 18 mit einem Gemisch aus Umgebungsluft 19 und Sauerstoff aus der Sauerstoffableitung 16 gespeist.

Am Auslass 32 der Vergasers 21 steht das fertige brennbare Gemisch aus in der Erregereinheit 22 behandeltem Wasserstoff und mit Umgebungsluft 19 vermischtem Sauerstoff 16 zur Verfügung. Über die Auslassleitung 32 kann dieses brennbare Gemisch beispielsweise dem Motor 33 zugeführt werden.

Das auf die beschriebene Weise hergestellte brennbare Gemisch lässt sich unter Abgabe thermischer Energie zu Wasser verbrennen, wenn eine entsprechende Zündung vorgesehen wird.

### BEZUGSZEICHENLISTE

- 1: Autobatterie
- 2: Ausgangskontakt
- 3: alternative Energiequelle
- 4: elektronische Steuerung
- 5: Spannungserhöher
- 6: Impulsgenerator
- 7: elektrische Leitung
- 8: Elektrolyseeinheit
- 9: Außenkorpus
- 10: Elektrodenplatte
- 11: Membran
- 12: Elektrolysekammer
- 13: Kammertrennwand
- 14: Ausgang (O₂)
- 15: Ausgang (H₂)
- 16: Sauerstoffableitung
- 17: Wasserstoffableitung
- 18: Luftmischer
- 19: Luftzuführung
- 20: Ausgangsleitung
- 21: Vergaser
- 22: Erregereinheit
- 23: Gehäuse
- 24: Einlaßöffnung
- 25: Auslaßöffnung
- 26: Kondensatorplatte
- 27: Kondensatorplatte
- 28: Erregerkammer
- 29: elektrische Leitung
- 30: elektrische Leitung
- 31: Auslaßleitung
- 32: Auslaß
- 33: Motor
- 34: Amplitudenwähler
- 35: Pulsregler
- 36: induktive Kopplung
- 37: Schwingkreis
- 38: Sperrdiode
- 39: Spule
- 40: Spule

## Patentansprüche

1. Verfahren zur Herstellung eines brennbaren Gemisches ausgehend von Wasser, bei welchem unter Einsatz von durch eine Spannungsquelle (1) mit einer Ausgangsspannung bereitgestellter elektrischer Energie Wasser in Wasserstoff und Sauerstoff zerlegt wird und an mindestens einen Bestandteil des Gemisches ein elektrisches Feld angelegt wird, **dadurch gekennzeichnet, dass**
a. Wasser durch eine Elektrolyse zerlegt wird;
b. der in Schritt (a) erzeugte Wasserstoff getrennt von dem Sauerstoff abgeleitet wird; und
c. nur an den im Schritt (a) erzeugten und im Schritt (b) abgeleiteten Wasserstoff ein elektrisches Feld angelegt wird;
d. anschließend der in Schritt (a) erzeugte Sauerstoff mit dem in Schritt (c) behandelten Wasserstoff zusammengeführt wird.

2. Verfahren nach Anspruch 1,**dadurch gekennzeichnet, daß** eine Membranelektrolyse durchgeführt wird.

3. Verfahren nach Anspruch 1 oder 2, **dadurch gekennzeichnet, daß** die elektrische Energie von einer Batterie und/oder einem Akkumulator (1), vorzugsweise mit einer Ausgangsspannung von 12V, bereitgestellt wird.

4. Verfahren nach einem der vorhergehenden Ansprüche, **dadurch gekennzeichnet, daß** es eine Erhöhung der Ausgangsspannung umfaßt.

5. Verfahren nach einem der vorhergehenden Ansprüche, **dadurch gekennzeichnet, daß** das elektrische Feld bei gleichbleibender Feldrichtung gepulst wird.

6. Verfahren nach einem der vorhergehenden Ansprüche, **dadurch gekennzeichnet, daß** der Akkumulator (1) unter Einsatz regenerativer Energie, insbesondere Windenergie, aufgeladen wird.

7. Vorrichtung zur Herstellung eines brennbaren Gemisches ausgehend von Wasser, umfassend eine Zerlegungsvorrichtung (8) zum Zerlegen von Wasser in die Bestandteile Wasserstoff und Sauerstoff unter Einsatz elektrischer Energie, eine elektrische Kondensatoreinheit (22), um an mindestens einen der Bestandteile ein elektrisches Feld anzulegen, eine elektrische Spannungsquelle (1) mit einer Ausgangsspannung zur elektrischen Versorgung der Zerlegungsvorrichtung (8) und der Kondensatoreinheit (22), **dadurch gekennzeichnet, daß** die Zerlegungsvorrichtung (8) zur elektrolytischen Zerlegung von Wasser ausgestaltet ist.

8. Vorrichtung nach Anspruch 7, **dadurch gekennzeichnet, daß** die Zerlegungsvorrichtung (8) zur Durchführung einer Membranelektrolyse ausgebildet ist.

9. Vorrichtung nach Anspruch 7 oder 8, **dadurch gekennzeichnet, daß** separate Mittel (14, 15) zum Auffangen und getrennten Ableiten jedes der beiden Elektrolysegase aus der Zerlegungsvorrichtung (8) vorgesehen sind.

10. Vorrichtung nach einem der Ansprüche 7 bis 9, **dadurch gekennzeichnet, daß** nur die Mittel (15) zum Auffangen von Wasserstoff in die Kondensatoreinheit (22) mündend angeordnet sind.

11. Vorrichtung nach einem der Ansprüche 7 bis 10, **dadurch gekennzeichnet, daß** die Kondensatoreinheit (22) als Plattenkondensator (26, 27) und/oder als Zylinderkondensator ausgestaltet ist.

12. Vorrichtung nach einem der Ansprüche 7 bis 11, **dadurch gekennzeichnet, daß** eine Spannungserhöhungsvorrichtung (5) zum Erhöhen der Ausgangsspannung vorgesehen ist.

13. Vorrichtung nach einem der Ansprüche 7 bis 12, **dadurch gekennzeichnet, daß** Mittel (6) zum Umformen der Ausgangsspannung in eine mit einer Frequenz gepulste Spannung mit konstanter Polung vorgesehen sind, wobei die Frequenz variabel wählbar ausgestaltet ist.

14. Vorrichtung nach einem der Ansprüche 7 bis 13, **dadurch gekennzeichnet, daß** Mittel (21) zum Mischen des in der Kondensatoreinheit (22) behandelten Wasserstoffs mit dem Sauerstoff vorgesehen sind.
